# EUROPEAN PATENT APPLICATION

(11) **EP 4 682 429 A1**
(43) Date of publication of application: **21.01.2026**
(21) Application number: 25173278.0
(22) Date of filing: 29.04.2025
(51) Int. Cl.: F24C 7/08, F24C 15/16, G06V 10/75

(54) **A COOKING DEVICE COMPRISING A CAMERA**

(30) Priority: 17.07.2024 TR 202409226
(71) Applicant: Arçelik Anonim Sirketi, 34445 Istanbul (TR)
(72) Inventor: BILGIN, ZEKI, 34445 ISTANBUL (TR); ERDEM, FUNDA, 34445 ISTANBUL (TR); OMER, EBRAR, 34445 ISTANBUL (TR); ATLI, MEHMET, 34445 ISTANBUL (TR)

(57) **Abstract**

The present invention relates to a cooking device (1) comprising a body (2); a cooking chamber (3) which is disposed in the body (2) and wherein the foodstuffs to be cooked are placed; a casing (4) which is in the form of a box with an open front and which surrounds the cooking chamber (3); at least one heater (5) which is disposed in the cooking chamber (3) and which enables the cooking of the foodstuffs; a door (6) which is provided on the body (2) and which isolates the cooking chamber (3) from the outside environment; at least one cooking tray (7) which is placed in the cooking chamber (3) and whereon the foodstuffs to be cooked are placed; a plurality of shelves (8) which are provided in the cooking chamber (3), each having a different level whereon the cooking tray (7) is placed; and at least one display member (9) which is provided on the ceiling of the cooking chamber (3) and which enables the cooking chamber (3) to be displayed.

## Description

The present invention relates to a cooking device comprising a display member.

**In** ovens, the cooking process is performed by means of heaters. The heaters enable the foodstuffs placed into the cooking chamber to be cooked. It is a priority for cooking devices that the cooking process is suitable for the foodstuff type and homogeneous such that every part of the foodstuff is cooked to the desired level. The air heated by heaters in the cooking chamber is also highly related to the cooking of foodstuffs and the desired cooking quality. **In** order to provide homogeneous cooking, the hot air is distributed in the cooking chamber by means of the fans in some ovens. However, every foodstuff cannot be homogeneously cooked by just distributing the air. Different types of foodstuffs are required to be cooked with different cooking algorithms. Therefore, in the state of the art, cooking devices which can offer various foodstuff algorithms depending on the foodstuff type are developed. However, due to the user positioning the foodstuff in the wrong place in the cooking chamber, the desired homogeneous cooking cannot be achieved with the cooking algorithms either.

**In** the state of the art European Patent No. EP3287700, a cooking device is disclosed, which detects shelves.

The aim of the present invention is the realization of a cooking device with increased cooking quality.

The cooking device realized in order to attain the aim of the present invention, explicated in the first claim and the respective claims thereof, comprises a body; a cooking chamber which is disposed in the body; a casing which surrounds the cooking chamber; at least one heater which provides the cooking of the foodstuffs; a door which provides the isolation of the cooking chamber from the outside environment; at least one cooking tray which is placed into the cooking chamber; a plurality of shelves which enable the cooking tray to be positioned at different levels in the cooking chamber; and at least one display member which is disposed at the ceiling of the cooking chamber. The foodstuff to be cooked is placed on the cooking tray, which is then placed on the shelves on the cooking chamber. The shelf position of the cooking tray may vary depending on the foodstuff type. In order to ensure the quality cooking of different foodstuffs, the positions thereof relative to the heater vary. Therefore, the tray is placed onto the shelves at various levels. The cooking process is displayed by means of the display member. Depending on the image of the foodstuff, the cooking degree and the cooking algorithms can be adjusted.

The cooking device of the present invention comprises at least one indicator which is provided on the cooking tray and a control unit which enables the positioned of the shelf whereon the cooking tray is placed to be determined depending on the position of the indicator determined by means of the display member. Thus, the position of the shelf whereon the user places the cooking tray can be determined and the cooking process can be controlled.

In an embodiment of the present invention, the cooking device comprises the control unit which enables the position of the cooking tray to be determined by identifying the images taken by means of the display member of the indicator when the cooking tray is placed on the shelves at different levels. The shelf position is determined by comparing the images of the indicator taken with the images of the indicator predefined separately for each shelf position.

In an embodiment of the present invention, the cooking device comprises the control unit which enables the shelf position of the cooking tray to be determined by measuring the distances of the indicator to the cooking chamber. The distances of the indicator to the cooking chamber walls are displayed by means of the display member. The shelf position is determined by comparing the said distances with the distance values prerecorded in the control unit memory.

In an embodiment of the present invention, the cooking device comprises a reference frame and the control unit which enables the position of the cooking tray to be determined depending on the compatibility of the image of the indicator taken by the display member with the frame. A virtual frame is defined on the control unit. The image of the indicator which falls within the virtual frame enables the position thereof to be determined.

In an embodiment of the present invention, the cooking device comprises the indicator which has a form that can be detected by means of the display member. The indicator being different from anything which can be placed in the cooking chamber facilitates the detection thereof.

In an embodiment of the present invention, the cooking device comprises a panel which enables the user to define the foodstuff type, and the control unit which enables the user to be informed about the cooking process by evaluating the determined foodstuff type and the shelf position information together. The user is enabled to be informed about the cooking process depending on the shelf position and the foodstuff type preferred by the user. The cooking time and degree are determined depending on the shelf position and the foodstuff type information.

In an embodiment of the present invention, the cooking device comprises the control unit which enables the user to be warned if the defined foodstuff type and the determined shelf position are not compatible with each other. The most suitable shelf position determined depending on the foodstuff type is prerecorded on the control unit by the manufacturer. After the shelf position preferred by the user is determined, the suitability thereof is checked. If the shelf position is not suitable for the foodstuff type, the user is enabled to be warned.

In an embodiment of the present invention, the cooking device comprises the control unit which enables the cooking algorithm to be changed if the selected foodstuff type and the determined shelf position are not compatible with each other. If the selected food type and the determined shelf position are not compatible with each other, the cooking algorithm is changed so as to provide the best cooking under the current conditions. Thus, homogeneous cooking is provided in cases of incorrect positioning.

In an embodiment of the present invention, the cooking device comprises the control unit which enables the cooking algorithm to be actively controlled by means of continuously monitoring the cooking process with the display member and by means of the shelf position and the foodstuff type information. It is known which area the heaters affect and in what amount depending on the shelf position. Thus, the required cooking process can be determined and provided by means of the cooked foodstuff image. Consequently, a homogeneous cooking process is performed.

By means of the present invention, a cooking device is realized, comprising a control unit which provides homogeneous cooking.

A cooking device realized in order to attain the aim of the present invention is illustrated in the attached figures, where:

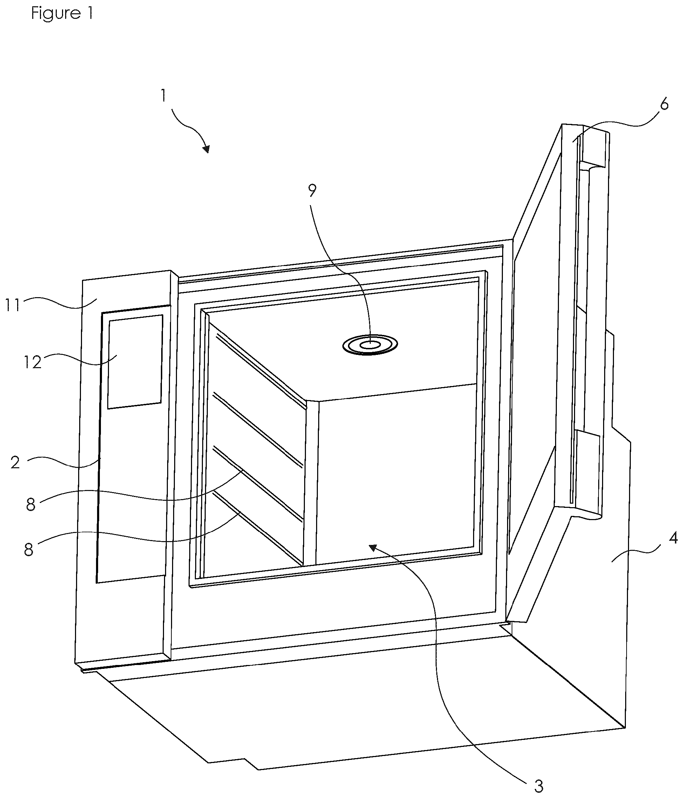

- Figure 1 -: is the perspective view of the cooking device.

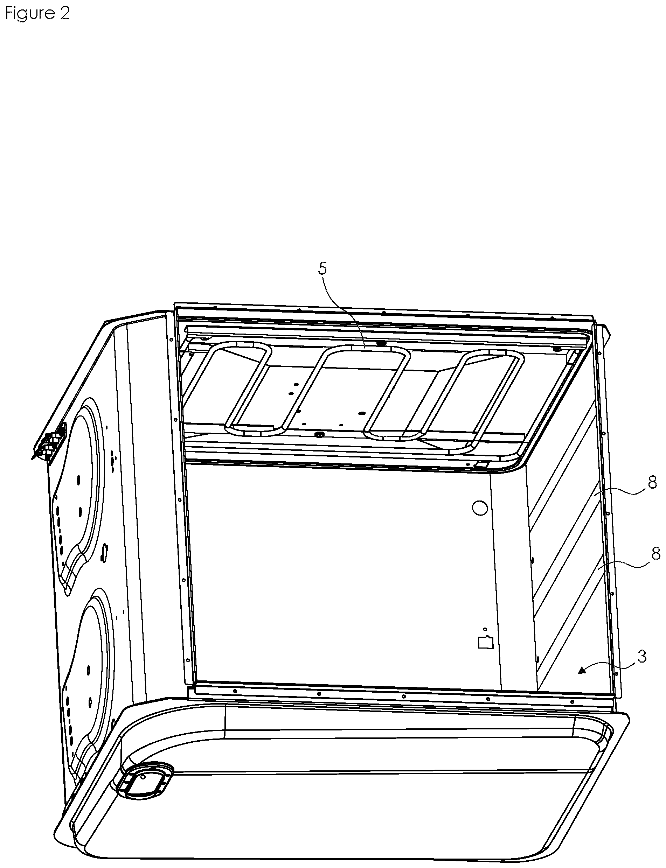

- Figure 2 -: is the perspective view of the cooking chamber.

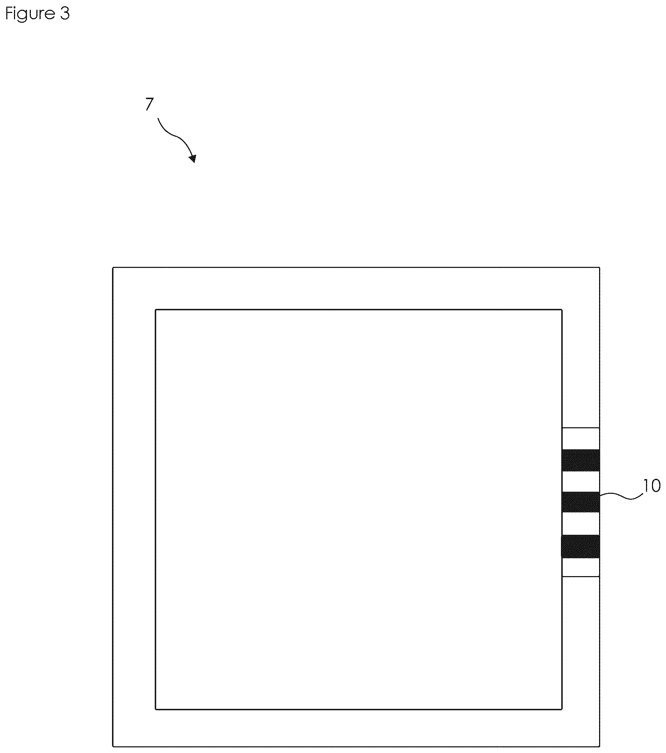

- Figure 3 -: is the top view of the cooking tray.

The elements illustrated in the figures are numbered as follows.
- 1-: Cooking device
- 2-: Body
- 3-: Cooking chamber
- 4-: Casing
- 5-: Heater
- 6-: Door
- 7-: Cooking tray
- 8-: Shelf
- 9-: Display member
- 10-: Indicator
- 11-: Control unit
- 12-: Panel

The cooking device (1) comprises a body (2); a cooking chamber (3) which is disposed in the body (2) and wherein the foodstuffs to be cooked are placed; a casing (4) which is in the form of a box with an open front and which surrounds the cooking chamber (3); at least one heater (5) which is disposed in the cooking chamber (3) and which enables the cooking of the foodstuffs; a door (6) which is provided on the body (2) and which isolates the cooking chamber (3) from the outside environment; at least one cooking tray (7) which is placed in the cooking chamber (3) and whereon the foodstuffs to be cooked are placed; a plurality of shelves (8) which are provided in the cooking chamber (3), each having a different level whereon the cooking tray (7) is placed; and at least one display member (9) which is provided on the ceiling of the cooking chamber (3) and which enables the cooking chamber (3) to be displayed. The foodstuff to be cooked is placed on the cooking tray (7), which is then placed on the shelves (8) in the cooking chamber (3). Depending on the position of the heater (5), different cooking is provided on the shelves (8) at different levels. Therefore, it is important to choose the shelf (8) suitable for the foodstuff type to ensure homogeneous cooking. The cooking process can be controlled by monitoring the food being cooked by means of the display element (9).

The cooking device (1) of the present invention comprises at least one indicator (10) which is provided on the cooking tray (7); the display member (9) which enables the location of the indicator (10) to be displayed; and a control unit (11) which enables the shelf (8) position of the cooking tray (7) to be determined by comparing the information coming from the display member (9) with the images prerecorded in the memory thereof by the manufacturer. The references regarding the position of the indicator (10) in the cooking chamber (3) are recorded in the memory of the control unit (11). The shelf (8) level of the cooking tray (7) is determined by comparing the images taken with the reference images. Thus, the conditions for cooking the foodstuffs are determined and homogeneous cooking is ensured.

In an embodiment of the present invention, the cooking device (1) comprises the control unit (11) which enables the position of the cooking tray (7) to be determined thanks to the manufacturer predefining the images of the indicator (10) by means of the display member (9) when the cooking tray (7) is placed on different shelf (8) levels. When the cooking tray (7) is placed on different shelf (8) levels, the image of the indicator (10) detected by the display member (9) varies. The various images at different levels are prerecorded on the control unit (11) by the manufacturer. The position of the cooking tray (7) in the cooking chamber (3) is determined based on the image of the indicator (10) by means of the control unit (11) with the photo matching method.

In an embodiment of the present invention, the cooking device (1) comprises the control unit (11) which enables the position of the cooking tray (7) to be determined thanks to the manufacturer predefining the distances of the images of the indicator (10) to the cooking chamber when the cooking tray (7) is placed on different shelf (8) levels. The distances of the indicator (10) image to the side walls of the cooking chamber (3) on different shelf (8) levels are determined and recorded on the control unit (11). The distance of the indicator (10) image detected by means of the display member (9) to the side walls is determined and compared with the reference values. As the distance between the indicator (10) and the side wall increases, it is determined that the cooking tray (7) moves away from the display member (9), that is, located in the lower shelf (8) positions. When the distance between the indicator (10) and the side walls decreases, it is determined that the cooking tray (7) is in the upper shelf (8) positions.

In an embodiment of the present invention, the cooking device (1) comprises a reference frame and the control unit (11) which enables the position of the cooking tray (7) to be determined depending on the compatibility, with the frame, of the images taken by means of the display member (9) of the indicator (10) when the cooking tray is placed on different shelf (8) levels. A virtual frame is formed on the control unit (11). The position of the indicator (10) is determined depending on the compatibility of the image detected by the display member (9) with the virtual frame and thus the position of the cooking tray (7) in the cooking chamber (3) is determined. When the indicator (10) completely fills the frame and is even larger than the frame, it is determined that the cooking tray (7) is close to the display member (9), that is, in the upper shelf (8) position, and if detected to be in a smaller size than the frame, it is determined that the cooking tray (7) is in the lower shelf (8) positions.

In an embodiment of the present invention, the cooking device (1) comprises the indicator (10) having a shape which can be detected by the display member (9). Since the indicator (10) has a shape which cannot be present in the cooking chamber (3), the indicator (10) is easily distinguished from other things such as foodstuff, etc. in the cooking chamber (3). Thus, the indicator (10) becomes easier to be detected by means of the display member (9). For example, having different bright colors or a striped form makes the indicator (10) easier to detect.

**In** an embodiment of the present invention, the cooking device (1) comprises a panel (12) which enables the user to define the foodstuff type, and the control unit (11) which enables the user to be informed about the cooking process by evaluating the determined foodstuff type and the detected shelf (8) position together. The user can select the foodstuff type to be cooked via the panel (12). The detected shelf (8) position information can also be evaluated together and the user can be offered the necessary temperature, time or program information to ensure the performance of a homogeneous cooking process. Thus, the homogeneous cooking is achieved suitable for the shelf (8) position and foodstuff type.

**In** an embodiment of the present invention, the cooking device (1) comprises the control unit (11) which enables the user to be warned if the defined foodstuff type and the determined shelf (8) position are not compatible with each other. The user is enabled to be warned when the detected shelf (8) position is not compatible according to the selected foodstuff type. The cooking device (1) can suggest the user to select the appropriate shelf (8). Thus, bad cooking experiences are prevented.

**In** an embodiment of the present invention, the cooking device (1) comprises the control unit (11) which enables the cooking algorithm to be changed if the defined foodstuff type and the determined shelf position are not compatible with each other. When the foodstuff type and the detected shelf (8) position are not compatible with each other, the control unit (11) provides that a cooking algorithm suitable for the conditions is executed. The temperature, time or cooking type can be changed depending on the foodstuff type and the position of the cooking tray (7). Thus, cooking problems caused by incorrect use are prevented.

In an embodiment of the present invention, the cooking device (1) comprises the control unit (11) which enables the cooking algorithm to be actively controlled by continuously monitoring the cooking process by means of the display member (9) and by evaluating the shelf (8) position and foodstuff information together. The display member (9) enables the cooking process to be continuously monitored. The cooking algorithm is dynamically changed by comparing the images depending on the foodstuff type defined for different stages of the cooking process on the control unit (11). Thus, an automatic and homogeneous cooking process is provided.

By means of the present invention, a cooking device (1) is realized, comprises a control unit (11) which provides that the shelf (8) position where the cooking tray (7) is placed in the cooking chamber (3) is detected and thus, the cooking process is performed.

## Claims

1. A cooking device (1) **comprising** a body (2); a cooking chamber (3) which is disposed in the body (2) and wherein the foodstuffs to be cooked are placed; a casing (4) which is in the form of a box with an open front and which surrounds the cooking chamber (3); at least one heater (5) which is disposed in the cooking chamber (3) and which enables the cooking of the foodstuffs; a door (6) which is provided on the body (2) and which isolates the cooking chamber (3) from the outside environment; at least one cooking tray (7) which is placed in the cooking chamber (3) and whereon the foodstuffs to be cooked are placed; a plurality of shelves (8) which are provided in the cooking chamber (3), each having a different level whereon the cooking tray (7) is placed; and at least one display member (9) which is provided on the ceiling of the cooking chamber (3) and which enables the cooking chamber (3) to be displayed, **characterized by** at least one indicator (10) which is provided on the cooking tray (7); the display member (9) which enables the location of the indicator (10) to be displayed; and a control unit (11) which enables the shelf (8) position of the cooking tray (7) to be determined by comparing the information coming from the display member (9) with the images prerecorded in the memory thereof by the manufacturer.

2. A cooking device (1) as in Claim 1, **characterized by** the control unit (11) which enables the position of the cooking tray (7) to be determined thanks to the manufacturer predefining the images of the indicator (10) by means of the display member (9) when the cooking tray (7) is placed on different shelf (8) levels.

3. A cooking device (1) as in Claim 1, **characterized by** the control unit (11) which enables the position of the cooking tray (7) to be determined thanks to the manufacturer predefining the distances of the images of the indicator (10) to the cooking chamber when the cooking tray (7) is placed on different shelf (8) levels.

4. A cooking device (1) as in Claim 1, **characterized by** a reference frame and the control unit (11) which enables the position of the cooking tray (7) to be determined depending on the compatibility, with the frame, of the images taken by means of the display member (9) of the indicator (10) when the cooking tray is placed on different shelf (8) levels.

5. A cooking device (1) as in any one of the above claims, **characterized by** the indicator (10) having a shape which can be detected by the display member (9).

6. A cooking device (1) as in any one of the above claims, **characterized by** a panel (12) which enables the user to define the foodstuff type, and the control unit (11) which enables the user to be informed about the cooking process by evaluating the determined foodstuff type and the detected shelf (8) position together.

7. A cooking device (1) as in Claim 6, **characterized by** the control unit (11) which enables the user to be warned if the defined foodstuff type and the determined shelf (8) position are not compatible with each other.

8. A cooking device (1) as in Claim 6, **characterized by** the control unit (11) which enables the cooking algorithm to be changed if the defined foodstuff type and the determined shelf position are not compatible with each other.

9. A cooking device (1) as in any one of Claims 6 to 8, **characterized by** the control unit (11) which enables the cooking algorithm to be actively controlled by continuously monitoring the cooking process by means of the display member (9) and by evaluating the shelf (8) position and foodstuff information together.
